# EUROPEAN PATENT SPECIFICATION

(11) **EP 3 744 994 B1**
(45) Date of publication and mention of the grant of the patent: **05.10.2022**
(21) Application number: 19177381.1
(22) Date of filing: 29.05.2019
(51) Int. Cl.: F16D 48/04, F16D 25/08

(54) **CLUTCH SERVO ASSEMBLY, CLUTCH ACTUATION SYSTEM AND A MOTOR VEHICLE**
KUPPLUNGSSERVOANORDNUNG, KUPPLUNGSBETÄTIGUNGSSYSTEM UND KRAFTFAHRZEUG
ENSEMBLE DE SERVO D'EMBRAYAGE, SYSTÈME D'ACTIONNEMENT D'EMBRAYAGE ET VÉHICULE À MOTEUR

(43) Date of publication of application: 02.12.2020
(73) Proprietor: ZF CV Systems Europe BV, 1170 Brussels (BE)
(72) Inventor: Holubecki, Daniel, 55-080 Katy Wroclawwskie (PL); Kowalski, Przemyslaw, 51-180 Wroclaw (PL)
(74) Representative: Rabe, Dirk-Heinrich

(56) References cited:
- EP-A2- 2 053 260
- CN-B- 101 858 393

## Description

### Technical field of the invention

The present invention relates to a clutch servo assembly. In accordance with an embodiment, the assembly comprises a pneumatic body, an actuator connected to the pneumatic body, a pneumatic pilot valve associated with the pneumatic body and configured to selectively supply pressurized air to the pneumatic body, an actuator rod movable within the actuator and at least partially within the pneumatic body, wherein the pneumatic body is in fluid communication with the atmosphere, wherein the pneumatic body is configured to allow bidirectional flow of air into and out of the pneumatic body. Further, the pneumatic body includes at least one exhaust conduit for resisting flow of air into the pneumatic body without completely closing the at least one exhaust conduit.

### Background of the invention

Clutch servos have the function to proportionally "amplify" the foot pedal force by using air from the vehicle's compressed air system by disengaging clutch in order to shift the gears.

The clutch servo is typically controlled hydraulically, in particular by a so called clutch master cylinder, and operates the clutch mechanically for example via a lever system. However, other control systems such as electronic control systems are also available instead of hydraulic control system.

For instance, when a hydraulic control system is used, the hydraulic pressure generated by depressing a clutch pedal drives the hydraulic rod which in turn opens a pilot valve associated with the clutch servo and connects the inlet of the clutch servo to a pneumatic body in order to supply the required air pressure needed to disengage the clutch. After disengaging the clutch, it is necessary to have the possibility to dissipate the needed air out of the clutch servo.

The time for dissipating the pressurized air determines the time needed for the gear shifting. The gear change time, for instance, may influence the fuel consumption of the vehicle due to resistance created due to the delay in gear shift.

One of the objects of the present invention is to provide means for dissipating pressurized air in a controlled manner from the clutch servo without affecting its operation.

On a different note, the patent publication EP2053260A2 discloses a booster, which has a booster piston moved by pneumatic pressure to boost clutch force. A control piston is moved by hydraulic pressure and controllable by the pneumatic pressure. The control piston is impinged with the booster piston. The control piston is provided in a chamber that is sealed by a diaphragm against a hydraulic chamber for receiving hydraulic fluid. The control piston is impinged by the hydraulic chamber for controlling the pneumatic pressure. A guide sleeve provided for guiding the control piston is made of plastic.

Similarly, another patent publication CN101858393B discloses a clutch booster provided with a pneumatic cylinder and a hydraulic cylinder which are connected along the same axis, wherein, a piston is arranged in the pneumatic cylinder, one side of the piston is connected with an action rod and the other side thereof is connected with a piston rod.

### Summary of the present invention

As regards the clutch servo assembly, the object is achieved by the invention with a clutch servo assembly according to claim 1 where a clutch servo assembly is provided. In accordance with an embodiment, the assembly comprises a pneumatic body, an actuator connected to the pneumatic body, a pneumatic pilot valve associated with the pneumatic body and configured to selectively supply pressurized air to the pneumatic body, an actuator rod movable within the actuator and at least partially within the pneumatic body, wherein the pneumatic body is in fluid communication with the atmosphere, wherein the pneumatic body is configured to allow bidirectional flow of air into and out of the pneumatic body. Further, the pneumatic body includes at least one exhaust conduit for resisting flow of air into the pneumatic body without completely closing the at least one exhaust conduit.

For instance, in the same embodiment, it is suggested that the exhaust conduit for resisting flow of air into the pneumatic body without completely closing the at least one exhaust conduit is provided with a first, outbound flow resistance and second, inbound flow resistance, wherein the second flow resistance is higher than the first flow resistance. Thus, for a given pressure inside the pneumatic body, the flow resistance determines the flow rate of the pressurized air being exhausted from the clutch servo and in particular the pneumatic body. Consequently, the time for exhausting is reduced compared to the time for charging or inhaling the pneumatic body. The development advantageously recognized that the time for exhausting the pneumatic body influences the time for shifting the gears by disengaging the clutch. Further, by reducing the inbound flow rate by the higher inbound flow resistance, the protection of clutch servo against dust and fluids from environment is improved.

In a preferred embodiment, the exhaust conduit has a flow restriction member, configured to provide the first flow resistance as a function of the outbound flow of pressurized air and to provide the second flow resistance as a function of the inbound flow of pressurized air. Advantageously, the embodiment allows influencing the directional flow resistance of the exhaust conduits by a flow restriction member. Thus, conventional exhaust conduits can be used and will be modified by flow restriction members, which allows to reduce the cost for manufacturing.

In a particular preferred embodiment, the clutch servo further comprises: a front plate sealingly connected to the pneumatic body, wherein the exhaust conduit is associated with the front plate and configured to allow bidirectional flow of pressurized air passing the front plate. The embodiment advantageously recognizes that the front plate describes a flat and in particular smooth part compared to a three-dimensional pneumatic body, and that the manufacturing costs can be reduced by associating the exhaust conduit with the front plate.

In a preferred embodiment, the front plate and the exhaust conduit or conduits are monolithic. Thus, the plurality of components needed for the clutch servo assembly is reduced which leads to a reduction of manufacturing costs, as well as an improved sealing of the front plate.

Preferably, the front plate and the exhaust conduit, in particular the flow restriction member, are formed from the same material, in particular a polymer. The embodiment advantageously recognizes that using the same material leads to a further reduction of manufacturing costs and allows a homogeneous characteristic of the front plate and the associated exhaust conduit and/or flow restriction member. By using a polymer material for the front plate and the exhaust conduit or conduits, the embodiment further advantageously recognizes that such a material has a suitable media resistance and is at least partly elastic, while at the same time being cost effective.

In a preferred embodiment, the flow restriction member is configured such that the air flow rate is larger during outbound flow than inbound flow. For instance, this can be achieved by providing the flow restriction member that has a variable opening diameter, being larger at outbound flow of pressurized air, than at inbound flow of pressurized air. The embodiment advantageously recognizes that the opening diameter and the associated cross-sectional area passed by the flow of pressurized air determines the flow resistance and consequently the volumetric flow and/or flow rate. By changing the opening diameter, for example via elastic deformation, the embodiment allows a reversible conversion of the flow resistance depending on the flow direction.

In a particular preferred embodiment, the flow restriction member has at least one flap separated by recesses, in particular curved and/or rectilinear slits, wherein the recesses are preferably aligned in a star-shape. Thus, the opening diameter determining the inbound and outbound flow resistance changes as a function of the deformation of said flaps. The recesses are giving an advantage to said deformation of said flap. The preferred alignment of the recesses allows an even deformation of the flaps when changing the opening diameter.

Preferably, the front plate has a circular cross-sectional area, and a plurality of exhaust conduits. The plurality of exhaust conduits are evenly distributed in a circular pattern and arranged coaxially in the front plate.

Preferably, some of the exhaust conduits are formed in accordance to any one of the preferred embodiments described herein above. Advantageously, the embodiment allows by the evenly distributed and coaxially arranged exhaust conduits a uniform pressure distributional front plate as well as a uniform flow of the pressurized air passing the front plate.

Preferably, the front plate and the pneumatic body are coupled in a positive fit. Thus, the plurality of wear parts is reduced which leads to lower manufacturing costs and lower mechanical wear.

In a preferred embodiment, the front plate comprises a sealing to protect the inside of the pneumatic body from environmental influences. Thus, the inside of the clutch servo is protected by a sealing which, in accordance with an embodiment is monolithic with the front plate. Accordingly, the number of rear parts is further reduced and the assembly is simplified.

In a preferred embodiment, the pneumatic body further comprises a filter unit, configured to filter the bidirectional stream of pressurized air passing the exhaust conduits, wherein the filter unit is preferably assembled in contact with the front plate and configured to support the front plate. Advantageously, the embodiment allows to increase the protection of the clutch servo in particular by filtering the inbound flow in the exhaust conduits comprising dust and dirt from the environment. Accordingly, the lifetime of the clutch servo is increased by avoiding contamination of the pneumatic body. Further, even if contaminations do pass the exhaust conduits and reach the inside of the pneumatic body, the filter helps to avoid an undesired blockage of the exhaust conduits by filtering also the outbound flow which can comprise particles from the inside of the pneumatic body.

Reasoned by the pressurized air inside the pneumatic body there are high forces acting on the front plate. The embodiment advantageously recognizes that the front plate is weakened by the at least one exhaust conduit and/or the elasticity and has to be supported. By assembling the filter unit in contact with the front plate, the filter unit has additional feature by supporting the front plate without the need of additional installation space.

In a particular preferred embodiment, the filter unit comprises a reinforcing plate, configured to support the front plate, and a filter element, adjacent to the front plate, configured to filter the flow of pressurized air. Thus, a construction of the filter unit is provided which is appropriate to the needed functions. The reinforcing plate is configured to support the front plate as well as the filter element from the forces from the inside of the pneumatic body caused by the pressurized air. The reinforcing plate can for example be made of steel or another material having a high stiffness. The filter element can be formed from a lightweight material, for example a foam, in order to filter the flow of pressurized air. Appropriate materials for such a filter element are, for example, a foam, a fabric or a membrane. Such materials in general do not provide high stiffness or strength. Accordingly, it is advantageous to separate the functions required for filtering and supporting.

In a preferred embodiment, the pneumatic body comprises a high pressure chamber, a low pressure chamber and a separating member, wherein the movement of the separating member within the pneumatic body changes the volume of the low and high pressure chambers respectively. For instance, such an arrangement leads to a changeable chamber volume, wherein the rate of volume change of the high pressure chamber corresponds to the rate of volume change of the low pressure chamber. It will be understood that correspondingly changing the volume of the high pressure chamber and the low pressure chamber means that by reducing the chamber volume of the high pressure chamber for example by 50 %, the volume of the low pressure chamber has to be extended by 50 %. Thus, the total volume of the pneumatic body remains constant and only the chamber volumes will change depending on the pressurized air supplied by the pilot valve or the exhausted air passing the exhaust conduits.

Preferably, the high pressure chamber is in fluid communication with the pilot valve to allow pressurized air entering the pneumatic body and in particular the high pressure chamber, and wherein the low pressure chamber is in fluid communication with the exhaust conduit or conduits to allow pressurized air passing the exhaust conduit. Thus, there is a high pressure chamber communicating with the pilot valve in such a way that a pneumatic force is generated by the pressurized air inside the high pressure chamber acting on the clutch, and the low pressure chamber configured to receive the pressurized air which was needed for shifting the gear and allow the pressurized air to exhaust by passing the exhaust conduits.

Preferably, the high pressure chamber and the low pressure chamber are in particular fluid-tightly separated from each other, and wherein the pneumatic body comprises an exhaust passage, configured for the fluid-conducting connection of the high pressure chamber and the low pressure chamber.

The embodiment advantageously allows that the pressurized air inside the high pressure chamber, which is in particular fluid-tightly separated from the low pressure chamber, can pass the exhaust passage in order to get exhausted by the exhaust conduits. Thus, the number of exhaust conduits associated to the pneumatic body can be reduced, as the outbound flow of pressurized air from the high pressure chamber can be exhausted by the same exhaust conduits as the pressurized air from the low pressure chamber.

In an exemplary embodiment, the clutch servo includes a hydraulic actuator with a hydraulic body. In accordance with this embodiment, the clutch servo further comprises a clutch spring, configured to apply a restoring force on the pneumatic body and/or the hydraulic body, and/or fluid-tightly coupled with the front plate. It will be understood, that applying a force can be realized direct or indirect for example by means of a lever system or a mechanical gear ratio. Advantageously, the embodiment recognizes that a clutch spring applying a restoring force on the pneumatic body and/or the hydraulic body provides an appropriate function to restore the hydraulic valve in a position, where the pilot valve is closed and no pressure is applied to the pneumatic body. Further, the coupling of the front plate and a boot facilitates providing an appropriate sealing against dust and dirt from the environment. Especially via monolithic forming of the boot and the front plate, the plurality of wear parts is reduced and the absence of joint has a positive effect on the sealing and the dirt resistance.

Preferably, the hydraulic rod is operatively coupled to a push rod, wherein the pressurized air in the pneumatic body and the hydraulic pressure in the hydraulic body is configured to actuate the push rod to disengage a clutch. Thus, the foot pedal actuates a master cylinder providing a hydraulic pressure which in addition activates the pilot valve which enables additionally pneumatic pressure to actuate the push rod. The push rod enables to disengage the clutch which can be disposed at a distance to the clutch servo. When disengaging the clutch an outbound stream of pressurized air is passing the exhaust conduits, in particular to get exhausted from the inside of the low pressure chamber.

Preferably, the hydraulic rod is configured and operatively coupled to be actuated by the push rod upon actuating force of the clutch spring acting on the push rod, to engage the clutch. Thus, the process of shifting the gears by disengaging the clutch is reversible by means of the clutch spring. The actuation force of the clutch spring can act in alternative or in addition to a pneumatic pressure in the pneumatic body acting on the push rod. After disengaging the clutch an inbound stream of pressurized air, which is significantly lower than the outbound stream of pressurized air, is passing the exhaust conduits. In addition, or in alternative, it is possible that pressurized air is passing the exhaust passage flowing from the high pressure chamber to the low pressure chamber.

The object of the invention is in a second aspect further achieved by a front plate configured for being mounted in a clutch servo assembly according to the preferred embodiments of the invention described above, wherein the front plate has a mounting surface configured to be sealingly connected to the pneumatic body, in particular in a positive fit, wherein the front plate comprises the at least one exhaust conduit configured to allow bidirectional flow of pressurized air into and out of the pneumatic body, wherein the exhaust conduit has a first, outbound flow resistance and a second, inbound flow resistance, wherein the second flow resistance is higher than the first flow resistance. The embodiment according to the second aspect incorporates the advantages described above by providing a front plate configured to be connected to and used in a clutch servo assembly. The examples and preferred embodiments of the clutch servo assembly of the first aspect described above are also the preferred examples and preferred embodiments of the front plate and vice versa.

With regard to the system, the object of the invention is achieved in a third aspect by a clutch actuation system comprising a clutch and a clutch servo assembly according to the preferred embodiments of the first aspect of invention described above. The examples and preferred embodiments of the clutch servo assembly described above are also the preferred examples and preferred embodiments of the clutch actuation system comprising said clutch servo assembly.

The object of the invention is in a fourth aspect further achieved by a motor vehicle comprising a clutch actuation system, in particular a clutch actuation system according to any one of the embodiments of the third aspect of the invention described above, having a clutch and a clutch servo assembly, in particular a clutch servo assembly according to the first aspect of the invention. The motor vehicle preferably comprises a bell housing of a gear box of a motor, and wherein the clutch servo assembly is mounted on said bell housing of said gear box of the motor. The examples and preferred embodiments of the clutch servo assembly described above are also the preferred examples and preferred embodiments of the motor vehicle comprising said clutch servo assembly.

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality.

This invention will now be described with reference to the accompanying drawings which illustrate, by way of example and not by way of limitation, one of several possible embodiments of the clutch servo proposed herein, and wherein
- Fig. 1: illustrates a motor vehicle schematically,
- Fig. 2: illustrates a clutch servo assembly for the motor vehicle according to Fig. 1 in a perspective view,
- Fig. 3: illustrates a sectional view of the clutch servo assembly according to Fig. 2,
- Fig. 4: illustrates a front plate having exhaust conduits for the clutch servo assembly according to Fig. 2.

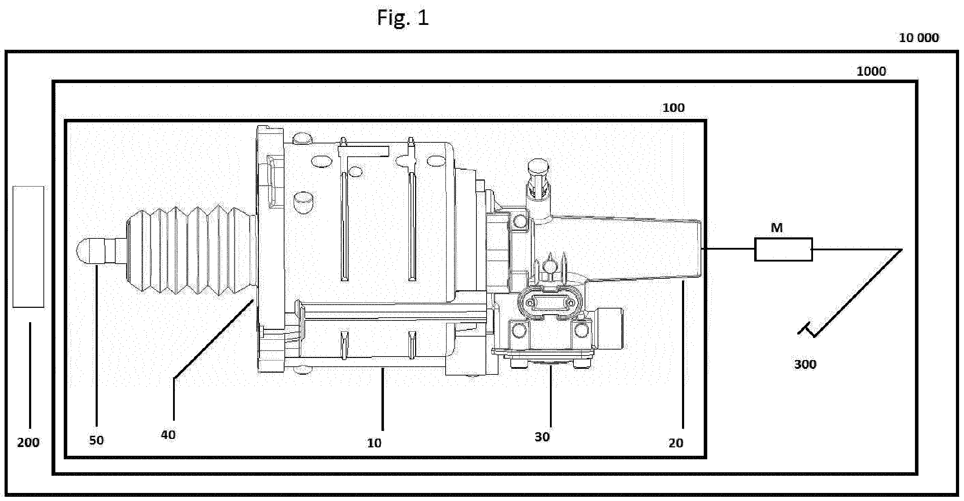

Fig. 1 shows a motor vehicle 10000 in principle. The motor vehicle 10000 comprises a clutch actuation system 1000 having a clutch servo assembly 100, a foot pedal 300, operatively associated with the clutch servo assembly 100, and a clutch 200 for connection and disconnection of two rotating shafts of the motor vehicle 10000.

When a driver depresses the foot pedal, the generated force is amplified by the clutch servo 100 in order to disengage the clutch 200 when changing the gears of the motor vehicle 10000.

The clutch servo assembly 100 is shown in an operation state not yet acting on the clutch 200 in a principle manner.

It is noted that for the purposes of the illustration, the present invention is described where the clutch servo assembly 100 includes a hydraulic actuator (not labeled in figure) with a hydraulic body 20. However, it is noted that the entire hydraulic actuator and any other hydraulically actuated components can be replaced either component wise or completely with an electrical actuator and/or any other actuators available in the market currently. It will be in any case, noted by the skilled person that such modifications are apparent. In accordance with the present illustrative embodiment, the clutch servo assembly 100 comprises a pneumatic body 10 and the hydraulic body 20 (or actuator body) which is assembled or connected to the pneumatic body 10. The clutch servo assembly 100 further comprises a pneumatic pilot valve 30 which is associated with the pneumatic body 10 to supply pressurized air, and a number of exhaust conduits 40, which are in fluid communication with the pneumatic body 10.

The pneumatic body 10 and the hydraulic body 20 are operatively coupled with a push rod 50 which is configured to disengage the clutch 200.

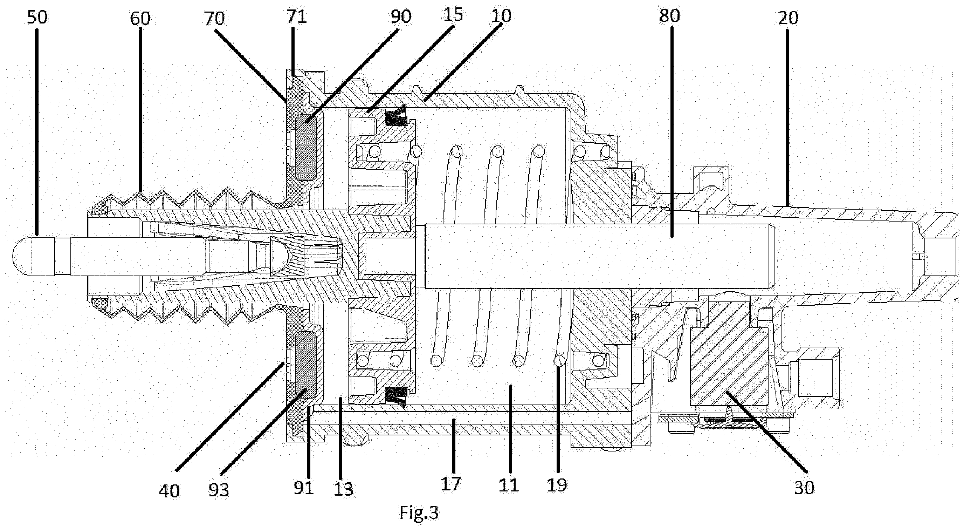

The push rod 50 is actuated by a hydraulic rod (not shown in Fig. 1, but see reference sign '80' of Fig. 3) or an actuator which is movable inside the actuator body or hydraulic body 20 and the pneumatic body 10 in response of a hydraulic pressure in the hydraulic body or any other workable force generated by the actuator body (e.g., electronic actuator). The hydraulic rod or the actuator rod is further configured to actuate the pneumatic pilot valve 30.

In accordance with the present invention, at least one exhaust conduit 40 is provided for resisting flow of air into the pneumatic body without completely closing the at least one exhaust conduit (40). In the illustrative example here, more than one exhaust conduit is shown. The exhaust conduits 40 are in fluid communication with the pneumatic body 10 for bidirectional flow of pressurized air between the inside of the pneumatic body 10 and in particular a bell housing in which the clutch servo assembly 100 is disposed. The exhaust conduits 40 have an inbound flow resistance and an outbound flow resistance, wherein the inbound flow resistance is higher than the outbound flow resistance.

In the following, the function of the motor vehicle when changing the gears is described as an illustrative example using hydraulic means.

For changing the gears of a motor vehicle 10000 a hydraulic pressure is generated by depressing the foot pedal 300 which applies a hydraulic pressure, in general by means of a so-called master cylinder. Driven by said hydraulic pressure, which is applied in the hydraulic body, the hydraulic rod moves in the hydraulic and pneumatic body 20, 10 to open the pneumatic valve 30. Thereby the movement of the hydraulic rod is allowing the pressurized air to enter the pneumatic body 10 and applying force on the push rod 50 which disengages the clutch 200. When the hydraulic pressure is removed from the hydraulic body 20, the push rod 50 moves backwards and thereby exhausting the pressurized air from the pneumatic body 10 through the exhaust conduits 40.

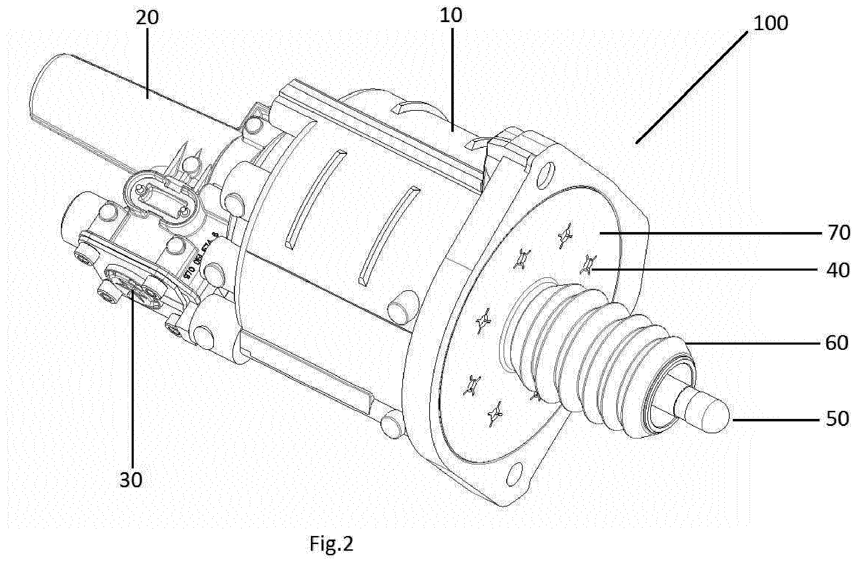

In accordance with an exemplary embodiment, Fig. 2 shows the clutch servo assembly 100 in a perspective view. The clutch servo assembly 100 comprises a pneumatic body 10, an actuator body 20 is connected to the pneumatic body, and a pilot valve associated with the pneumatic body 10. The pneumatic body 10 and the actuator or hydraulic body 20, are arranged in line, wherein the pneumatic pilot valve 30 is arranged adjacent to the actuator or hydraulic body 20. An actuator rod or a hydraulic rod is arranged in the actuator body 20 and moves, driven by the hydraulic pressure or any other workable force generated, in the direction of the pneumatic body 10, in order to open the pilot valve 30.

The clutch servo assembly 100 further comprises a boot 60, in particular formed from a rubber material, operatively coupled to the push rod 50. For instance, the boot 60 is directly or indirectly coupled to movable actuator or hydraulic rod of the clutch servo assembly.

The clutch servo assembly 100 further comprises a front plate 70, sealingly connected to the pneumatic body 10, wherein the number of exhaust conduits 40 is associated to the front plate to allow bidirectional flow of the pressurized air passing the front plate 70.

In accordance with an embodiment, the boot 60 and the front plate 70 are formed monolithic in order to improve the sealing of the pneumatic body.

As in particular shown in the sectional view of Fig. 3, the hydraulic or actuator rod 80 is operatively coupled with the push rod 50 and moving inside the actuator or hydraulic body 20 and at least partially within the pneumatic body 10 in order to actuate the push rod 50. In the illustrated embodiment, the clutch servo assembly 100 further comprises a filter unit 90, configured to filter the flow of pressurized air passing the exhaust conduits 40 formed in the front plate 70, and to support the front plate 70 which is at least partly elastic.

The pneumatic body 10 comprises a high pressure chamber 11, a low pressure chamber 13, fluid-tightly separated from each other, and a separating member 15. The high pressure chamber 11 and the low pressure chamber 13 are separated by the separating member 15 which is movably mounted within the pneumatic body 10. The high pressure chamber 11 and the low pressure chamber 13 are connected in a fluid-conducting manner via an exhaust passage 17 formed within the housing of the pneumatic body 10.

The separating member 15 is actuated by the actuator or hydraulic rod 80 and coupled to the push rod 50. The movement of the separating member 15 in order to drive the push rod 50 in the direction of the clutch 200 is supported by a support member 19 which is in this embodiment formed as a compression spring.

The volume of the high pressure chamber 11 and the low pressure chamber 13 is changing depending on position of the separating member 15. When reducing the volume of the high pressure chamber 11, the pressurized air inside the high pressure chamber 11 will be exhausted by passing an exhausting passage 17 connecting the high pressure chamber and the low pressure chamber. When reducing the volume of the low pressure chamber 13, the pressurized air inside the low pressure chamber 13 will pass the filter unit 90 and the exhaust conduits 40 formed in the front plate 70. For this purpose, the filter unit has a number of recesses, in particular formed in the reinforcing plate 91.

The circular front plate 70 comprises a sealing 71 which is formed as an O-ring sealing extending along the outer circumference of the front plate 70. The front plate 70 and the pneumatic body 10 are connected in a positive fit.

The filter unit 90 is arranged adjacent to the front plate 70 and also connected to the pneumatic body 10 in a positive fit.

The filter unit 90 comprises a reinforcing plate 91 which is, for example, made of a steel or another material providing a high stiffness and strength. The filter unit 90 further comprises a filter element 93 which is arranged between the front plate 70 and the reinforcing plate 91.

In the following, the function of the clutch servo is described as an illustrative example.

In one exemplary embodiment, the hydraulic pressure applied by forcing the foot pedal 300 inside the hydraulic or actuator body 20 actuates the actuator or hydraulic rod 80. In another embodiment, this hydraulic pressure could be replaced with an electronic or mechanical or any other workable force producing means. Therefore, hydraulic means is provided only for illustrative purposes and the hydraulic actuator could be replace with electronic or mechanical actuator as will be apparent to a skilled person. Such modifications are however not discussed herewith for the sake of brevity.

In any case, the hydraulic or actuator rod 80 moves from its position in the hydraulic or actuator body 20 in the direction similar to that of the pneumatic body 10. The movement of the hydraulic actuator rod 80 actuates the pneumatic pilot valve 30. When opening the pilot valve 30, pressurized air is flowing into the pneumatic body 10 and in particular into the high pressure chamber 11. The pressurized air in the high pressure chamber 11 and additionally the movement of the hydraulic or actuator rod 80 are the factors that force the push rod 50 in the direction of the clutch 200. The flow of pressurized air in the high pressure chamber 11 results in the movement of the separating member 15 and an increased chamber volume. The volume of the low pressure chamber 13 is reduced with the same rate as the volume of the high pressure chamber 11 increases. The pressurized air in the low pressure chamber 13 has to be exhausted very quickly in order to enable a fast changing of the gears. In order to dissipate the remaining pressurized air in the low pressure chamber 13, the air is passing the exhaust conduits 40 in the front plate 70. The outbound flow of the pressurized air has a higher flow rate of volume reasoned by the reduced outbound flow resistance of the exhaust conduits 40.

After disengaging the clutch 200, the push rod 50 is forced into the start position by the air from the atmosphere entering low pressure chamber 13 in addition or instead of any restoration means that is ordinarily enabled when a driver takes the foot off of the clutch pedal. When regressing the push rod 50, the separating member 15, which is operatively coupled to the push rod 50, is moved as well. In consequence, the volume of the high pressure chamber 11 is reduced and the volume of the low pressure chamber 13 increases. When increasing the volume of the low pressure chamber 13, first a negative pressure sets in, until a stream of pressurized air from the high pressure chamber 13 is passing the exhaust passage 17 and another stream of air is passing the exhaust conduits 40. The stream passing the exhaust conduits 40 has a lower flow rate of volume compared to the outbound stream of pressurized air. The inbound stream of pressurized air is first filtered by the filter element 93 of the filter unit 90 in order to avoid contamination of the pneumatic body 10.

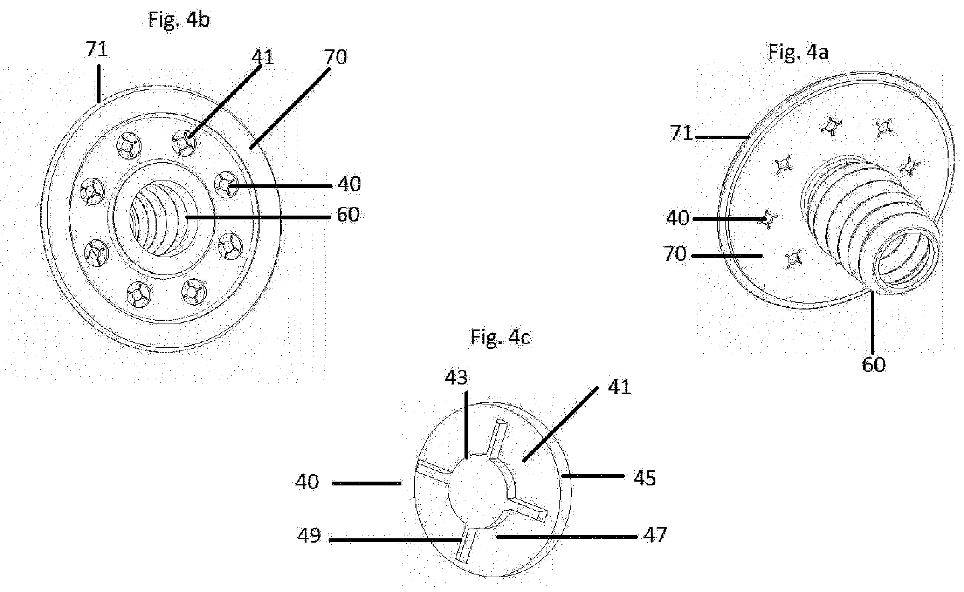

Figs. 4a, b, c show the front plate 70 and the boot 60 as the monolithic part. The exhaust conduits 40 are formed in the front plate 70. The front plate 70 further comprises a sealing 79 extending along the circumference of the front plate 70. As illustrated in Fig. 4b and 4c, the exhaust conduits 40 are arranged coaxially to the front plate 70 and the boot 60 arranged in the middle of the front plate 70 and having a cylindrical recess in the middle. The exhaust conduits 40 are evenly distributed. Each exhaust conduit 40 has a flow restriction member causing the inbound and outbound flow resistance. Each flow restriction member 41 has a variable opening diameter defined by an inner diameter 43 and an outer diameter 45. The inner diameter 43 is formed by an arrangement of flaps 47 separated from each other by recesses 49, in particular slots. The flaps 47 are forming an elastic part which can be converted from an inner diameter 43 to an outer diameter 45. The filter unit 90 and in particular the filter element 93 is configured to support the flaps 47 in the inbound flow direction. When the pressurized air is flowing outbound from the inside of the pneumatic body 10, there is no support for the elastic flaps 47 of the flow restriction members 41 of and the flaps 47 will bend outside caused by the outbound flow of the pressurized air. Thus, a conversion of the effective opening diameter of the exhaust conduits 40 is causing a higher flow rate of the pressurized air flowing in the outbound direction compared to the volume rate of inbound flowing pressurized air when the pressure remains constant.

### Reference character list (Part of the description)

- 10: Pneumatic body
- 11: High pressure chamber
- 13: Low pressure chamber
- 15: Separating member
- 17: Exhaust passage
- 19: Support element (Spring)
- 20: Hydraulic or actuator body
- 30: Pilot valve
- M: Master cylinder
- 40: Exhaust conduit
- 41: Flow restriction member
- 43: Inner diameter
- 45: Outer diameter
- 47: Flaps
- 49: Recesses
- 50: Push rod
- 60: Boot
- 70: Front plate
- 71: Sealing
- 80: Hydraulic or actuator rod
- 90: Filter unit
- 91: Reinforcing plate
- 93: Filter element
- 100: Clutch servo
- 200: Clutch
- 300: Pedal
- 1000: Clutch actuation system
- 10000: Motor vehicle

## Claims

1. Clutch servo assembly (100), comprising:
- a pneumatic body (10),
- an actuator connected to the pneumatic body (10),
- a pneumatic pilot valve (30) associated with the pneumatic body (10) and configured to selectively supply pressurized air to the pneumatic body (10),
- an actuator rod (80) movable within the actuator (20) and at least partially within the pneumatic body (10),
wherein the pneumatic body (10) is in fluid communication with the atmosphere, wherein the pneumatic body (10) is configured to allow bidirectional flow of air into and out of the pneumatic body (10),
**characterized in that** the pneumatic body (10) includes at least one exhaust conduit (40) for resisting flow of air into the pneumatic body (10) without completely closing the at least one exhaust conduit (40).

2. Clutch servo assembly (100), according to claim 1,
wherein the at least one exhaust conduit (40) has a flow restriction member (41), configured to provide the outbound flow resistance as a function of the outbound flow of pressurized air and to provide the inbound flow resistance as a function of the inbound flow of pressurized air.

3. Clutch servo assembly (100), according to any one of the claims 1 or 2, further comprising
- a front plate (70) sealingly connected to the pneumatic body (10),
wherein the exhaust conduit or conduits (40) are associated with the front plate (70) and configured to allow bidirectional flow of pressurized air passing the front plate (70).

4. Clutch servo assembly (100), according to claim 3,
wherein the front plate (70) and the exhaust conduit or conduits (40) are monolithic.

5. Clutch servo assembly (100), according to any one of the claims 3 or 4, wherein the front plate (70) and the exhaust conduits (40), in particular the flow restriction member (41), are formed from the same material, in particular a polymer.

6. Clutch servo assembly (100), according to any one of the claims 2 to 5, wherein the flow restriction member (41) is configured such that the air flow rate is larger during outbound flow than inbound flow.

7. Clutch servo assembly (100), according to any one of the claims 2 to 6, wherein the flow restriction member (41) has at least one flap (47) separated by recesses (49)incorporating curved and/or rectilinear slits.

8. Clutch servo assembly (100), according to any one of the claims 3 to 7, wherein the front plate (70) has a circular cross-sectional area, and a plurality of exhaust conduits
wherein the plurality of exhaust conduits (40) are evenly distributed in a circular pattern and arranged coaxially in the front plate (70).

9. Clutch servo assembly (100), according to any one of the claims 3 to 8, wherein the front plate (70) and the pneumatic body (10) are coupled in a positive fit.

10. Clutch servo assembly (100) according to any one of the claims 3 to 9, wherein the front plate (70) comprises a sealing (71) to protect the inside of the pneumatic body (10) from environmental influences.

11. Clutch servo assembly (100) according to any one of the preceding claims,
wherein the pneumatic body (10) further comprises a filter unit (90), configured to filter air passing the exhaust conduits (40),
wherein the filter unit (90) is preferably assembled in contact with the front plate (70) and configured to support the front plate (70).

12. Clutch servo assembly (100) according to claim 11,
wherein the filter unit (90) comprises a reinforcing plate (91), configured to support the front plate (70), and a filter element (93), preferably disposed adjacent to the front plate (70), and configured to filter the flow of pressurized air.

13. Clutch servo assembly (100) according to any one of the preceding claims,
wherein the pneumatic body (10) comprises a high pressure chamber (11) and a low pressure chamber (13) and a separating member (15), wherein the movement of the separating member (15) within the pneumatic body (10) changes the volume of the low and high pressure chambers respectively .

14. Clutch servo assembly (100), according to claim 13,
wherein the high pressure chamber (11) is in fluid communication with the pilot valve (30) to allow pressurized air entering the pneumatic body (10) and in particular the high pressure chamber (11), and
wherein the low pressure chamber (13) is in fluid communication with the exhaust conduit or conduits (40) to allow pressurized air passing the exhaust conduit.

15. Clutch servo assembly (100) according to any one of the claims 13 and 14,
wherein the high pressure chamber (11) and the low pressure chamber (13) are in particular fluid-tightly separated from each other, and
wherein the pneumatic body (10) comprises an exhaust passage (17), configured for the fluid-conducting connection of the high pressure chamber (11) and the low pressure chamber (13).

16. Clutch actuation system (1000), comprising a clutch and the clutch servo assembly in accordance with any one of the claims 1 to 15.

## Patentansprüche

1. Kupplungsservoanordnung (100), die Folgendes umfasst:
- einen pneumatischen Körper (10),
- einen Aktuator, der mit dem pneumatischen Körper (10) verbunden ist,
- ein pneumatisches Pilotventil (30), das mit dem pneumatischen Körper (10) verknüpft und dazu ausgelegt ist, dem pneumatischen Körper (10) selektiv Druckluft zuzuführen,
- eine Aktuatorstange (80), die im Aktuator (20) und mindestens teilweise im pneumatischen Körper (10) bewegbar ist,
wobei der pneumatische Körper (10) mit der Atmosphäre in Fluidkommunikation steht,
wobei der pneumatische Körper (10) dazu ausgelegt ist, einen bidirektionalen Luftstrom in den und aus dem pneumatischen Körper (10) zuzulassen,
**dadurch gekennzeichnet, dass** der pneumatische Körper (10) zum Zurückhalten eines Luftstroms in den pneumatischen Körper (10), ohne die mindestens eine Auslassleitung (40) vollständig zu schließen, mindestens eine Auslassleitung (40) beinhaltet.

2. Kupplungsservoanordnung (100) nach Anspruch 1,
wobei die mindestens eine Auslassleitung (40) ein Strömungsbeschränkungselement (41) aufweist, das dazu ausgelegt ist, die nach außen gerichtete Strömungsrückhaltung als eine Funktion des nach außen gerichteten Druckluftstroms bereitzustellen und die nach innen gerichtete Strömungsrückhaltung als eine Funktion des nach innen gerichteten Druckluftstroms bereitzustellen.

3. Kupplungsservoanordnung (100) nach einem der Ansprüche 1 oder 2, die ferner Folgendes umfasst
- eine Frontplatte (70), die abdichtend mit dem pneumatischen Körper (10) verbunden ist, wobei die Auslassleitung oder -leitungen (40) mit der Frontplatte (70) verknüpft und dazu ausgelegt sind, einen bidirektionalen Druckluftstrom, der die Frontplatte (70) passiert, zuzulassen.

4. Kupplungsservoanordnung (100) nach Anspruch 3,
wobei die Frontplatte (70) und die Auslassleitung oder - leitungen (40) monolithisch sind.

5. Kupplungsservoanordnung (100) nach einem der Ansprüche 3 oder 4,
wobei die Frontplatte (70) und die Auslassleitungen (40), insbesondere das Strömungsbeschränkungselement (41), aus demselben Material gebildet sind, insbesondere einem Polymer.

6. Kupplungsservoanordnung (100) nach einem der Ansprüche 2 bis 5,
wobei das Strömungsbeschränkungselement (41) derart ausgelegt ist, dass die Luftströmungsrate während des nach außen gerichteten Stroms größer ist als während des nach innen gerichteten Stroms.

7. Kupplungsservoanordnung (100) nach einem der Ansprüche 2 bis 6,
wobei das Strömungsbeschränkungselement (41) mindestens eine Klappe (47) aufweist, die durch Ausnehmungen (49) getrennt sind, die gekrümmte und/oder geradlinige Schlitze aufweisen.

8. Kupplungsservoanordnung (100) nach einem der Ansprüche 3 bis 7,
wobei die Frontplatte (70) eine kreisförmige Querschnittsfläche und eine Vielzahl von Auslassleitungen aufweist
wobei die Vielzahl von Auslassleitungen (40) in einem Kreismuster gleichmäßig verteilt und koaxial in der Frontplatte (70) angeordnet sind.

9. Kupplungsservoanordnung (100) nach einem der Ansprüche 3 bis 8,
wobei die Frontplatte (70) und der pneumatische Körper (10) formschlüssig gekoppelt sind.

10. Kupplungsservoanordnung (100) nach einem der Ansprüche 3 bis 9,
wobei die Frontplatte (70) zum Schutz der Innenseite des pneumatischen Körpers (10) vor Umwelteinflüssen eine Dichtung (71) umfasst.

11. Kupplungsservoanordnung (100) nach einem der vorhergehenden Ansprüche,
wobei der pneumatische Körper (10) ferner eine Filtereinheit (90) umfasst, die dazu ausgelegt ist, Luft, die die Auslassleitungen (40) passiert, zu filtern,
wobei die Filtereinheit (90) vorzugsweise in Kontakt mit der Frontplatte (70) montiert und dazu ausgelegt ist, die Frontplatte (70) zu stützen.

12. Kupplungsservoanordnung (100) nach Anspruch 11,
wobei die Filtereinheit (90) eine Verstärkungsplatte (91), die dazu ausgelegt ist, die Frontplatte (70) zu stützen, und eine Filterkomponente (93), die vorzugsweise neben der Frontplatte (70) angebracht und dazu ausgelegt ist, den Druckluftstrom zu filtern, umfasst.

13. Kupplungsservoanordnung (100) nach einem der vorhergehenden Ansprüche,
wobei der pneumatische Körper (10) eine Hochdruckkammer (11) und eine Niederdruckkammer (13) und ein Trennelement (15) umfasst, wobei die Bewegung des Trennelements (15) im pneumatischen Körper (10) das Volumen der Nieder- bzw. der Hochdruckkammer ändert.

14. Kupplungsservoanordnung (100) nach Anspruch 13,
wobei die Hochdruckkammer (11) mit dem Pilotventil (30) in Fluidkommunikation steht, um es zuzulassen, dass Druckluft in den pneumatischen Körper (10) und insbesondere in die Hochdruckkammer (11) eindringt, und
wobei die Niederdruckkammer (13) mit der Auslassleitung bzw. den Auslassleitungen (40) in Fluidkommunikation steht, um es zuzulassen, dass Druckluft die Auslassleitung passiert.

15. Kupplungsservoanordnung (100) nach einem der Ansprüche 13 und 14,
wobei die Hochdruckkammer (11) und die Niederdruckkammer (13) insbesondere fluiddicht voneinander getrennt sind und
wobei der pneumatische Körper (10) eine Auslassdurchführung (17) umfasst, die für die Fluidleitungsverbindung der Hochdruckkammer (11) und der Niederdruckkammer (13) ausgelegt ist.

16. Kupplungsbetätigungssystem (1000), das eine Kupplung und die Kupplungsservoanordnung nach einem der Ansprüche 1 bis 15 umfasst.

## Revendications

1. Ensemble maître-cylindre d'embrayage (100) comprenant :
un corps pneumatique (10),
un actionneur raccordé au corps pneumatique (10),
une soupape pilote pneumatique (30) associée au corps pneumatique (10) et configurée pour fournir sélectivement de l'air sous pression au corps pneumatique (10),
une tige d'actionneur (80) mobile dans l'actionneur (20) et au moins partiellement dans le corps pneumatique (10),
dans lequel le corps pneumatique (10) est en communication de fluide avec l'atmosphère,
dans lequel le corps pneumatique (10) est configuré pour permettre l'écoulement bidirectionnel de l'air à l'intérieur et à l'extérieur du corps pneumatique (10),
**caractérisé en ce que** le corps pneumatique (10) comprend au moins un conduit d'échappement (40) pour résister à l'écoulement d'air dans le corps pneumatique (10) sans complètement fermer le au moins un conduit d'échappement (40).

2. Ensemble maître-cylindre d'embrayage (100) selon la revendication 1,
dans lequel le au moins un conduit d'échappement (40) a un élément de restriction d'écoulement (41), configuré pour fournir la résistance à l'écoulement sortant en fonction de l'écoulement sortant de l'air sous pression et pour fournir la résistance à l'écoulement entrant en fonction de l'écoulement entrant de l'air sous pression.

3. Ensemble maître-cylindre d'embrayage (100) selon l'une quelconque des revendications 1 ou 2, comprenant en outre :
une plaque avant (70) raccordée, de manière étanche, au corps pneumatique (10),
dans lequel le conduit ou les conduits d'échappement (40) sont associés à la plaque avant (70) et configurés pour permettre l'écoulement bidirectionnel de l'air sous pression passant par la plaque avant (70).

4. Ensemble maître-cylindre d'embrayage (100) selon la revendication 3,
dans lequel la plaque avant (70) et le conduit ou les conduits d'échappement (40) sont monolithiques.

5. Ensemble maître-cylindre d'embrayage (100) selon l'une quelconque des revendications 3 ou 4, dans lequel la plaque avant (70) et les conduits d'échappement (40), en particulier l'élément de limitation d'écoulement (41), sont formés à partir du même matériau, en particulier un polymère.

6. Ensemble maître-cylindre d'embrayage (100) selon l'une quelconque des revendications 2 à 5, dans lequel l'élément de limitation d'écoulement (41) est configuré de sorte que le débit d'air est plus important pendant l'écoulement sortant que pendant l'écoulement entrant.

7. Ensemble maître-cylindre d'embrayage (100) selon l'une des revendications 2 à 6, dans lequel l'élément de limitation d'écoulement (41) a au moins un volet (47) séparé par des évidements (49) comprenant des fentes incurvées et/ou rectilignes.

8. Ensemble maître-cylindre d'embrayage (100) selon l'une quelconque des revendications 3 à 7, dans lequel la plaque avant (70) a une zone transversale circulaire et une pluralité de conduits d'échappement,
dans lequel la pluralité de conduits d'échappement (40) sont régulièrement répartis selon un motif circulaire et agencés de manière coaxiale dans la plaque avant (70).

9. Ensemble maître-cylindre d'embrayage (100) selon l'une quelconque des revendications 3 à 8, dans lequel la plaque avant (70) et le corps pneumatique (10) sont couplés par complémentarité de forme.

10. Ensemble maître-cylindre d'embrayage (100) selon l'une quelconque des revendications 3 à 9, dans lequel la plaque avant (70) comprend un joint d'étanchéité (71) pur protéger l'intérieur du corps pneumatique (10) des influences environnementales.

11. Ensemble maître-cylindre d'embrayage (100) selon l'une quelconque des revendications précédentes,
dans lequel le corps pneumatique (10) comprend en outre une unité de filtre (90) configurée pour filtrer l'air passant dans les conduits d'échappement (40),
dans lequel l'unité de filtre (90) est de préférence assemblée en contact avec la plaque avant (70) et configurée pour supporter la plaque avant (70).

12. Ensemble maître-cylindre d'embrayage (100) selon la revendication 11, dans lequel l'unité de filtre (90) comprend une plaque de renforcement (91) configurée pour supporter la plaque avant (70), et un élément de filtre (93), de préférence disposé de manière adjacente à la plaque avant (70) et configuré pour filtrer l'écoulement d'air sous pression.

13. Ensemble maître-cylindre d'embrayage (100) selon l'une quelconque des revendications précédentes,
dans lequel le corps pneumatique (10) comprend une chambre haute pression (11) et une chambre basse pression (13) et un élément de séparation (15), dans lequel le mouvement de l'élément de séparation (15) à l'intérieur du corps pneumatique (10) modifie le volume des chambres basse et haute pression respectivement.

14. Ensemble maître-cylindre d'embrayage (100) selon la revendication 13,
dans lequel la chambre haute pression (11) est en communication de fluide avec la soupape pilote (30) pour permettre à l'air sous pression d'entrer dans le corps pneumatique (10) et en particulier la chambre haute pression (11), et
dans lequel la chambre basse pression (13) est en communication de fluide avec le conduit ou les conduits d'échappement (40) pour permettre à l'air sous pression de passer par le conduit d'échappement.

15. Ensemble maître-cylindre d'embrayage (100) selon l'une quelconque des revendications 13 et 14,
dans lequel la chambre haute pression (11) et la chambre basse pression (13) sont en particulier séparées l'une de l'autre, de manière étanche au fluide, et
dans lequel le corps pneumatique (10) comprend un passage d'échappement (17) configuré pour la liaison fluidique de la chambre haute pression (11) et de la chambre basse pression (13) .

16. Système d'actionnement d'embrayage (1000) comprenant un embrayage et l'ensemble maître-cylindre d'embrayage selon l'une quelconque des revendications 1 à 15.
